# EUROPÄISCHE PATENTANMELDUNG

(11) **EP 2 778 915 A1**
(43) Veröffentlichungstag der Anmeldung: **17.09.2014**
(21) Anmeldenummer: 13158931.9
(22) Anmeldetag: 13.03.2013
(51) Int. Cl.: G06F 9/48, G06F 9/50

(54) **Verfahren zum Betrieb einer Industriesteuerung und Industriesteuerung**

(71) Anmelder: Siemens Aktiengesellschaft, 80333 München (DE)
(72) Erfinder: Grosch, Thomas, 90574 Roßtal (DE); Richter, Jan, 91207 Lauf a. d. Pegnitz (DE)

(57) **Zusammenfassung**

Die Erfindung betrifft ein Verfahren zum Betrieb einer Industriesteuerung (100), wobei ein in einem in der Industriesteuerung (100) angeordnetem Prozessor ablauffähiges Steuerungsprogramm (50) in einen Hauptbaustein (OB1) und mehrere Programmbausteine (OB10,OB35,OB40,OB80) unterteilt wird, wobei die Programmbausteine (OB10,OB35,OB40,OB80) unter Berücksichtigung einer Bearbeitungspriorität (21) ereignisgesteuert bearbeitet werden, wobei als Prozessor ein Mehrkernprozessor (10) mit einer Mehrzahl von eigenständigen Unterprozessoren (1,2,3,4,5,6,7) verwendet wird, wobei der Hauptbaustein (OB1) einem ersten Unterprozessor (1) zugeordnet wird und ein zu dem Hauptbaustein (OB1) zugehörige Teilprogramm darin zum Ablauf gebracht wird und weiterhin die mehreren Programmbausteine (OB10,OB35,OB40,OB80) jeweils den weiteren Unterprozessoren (2,3,4,5,6,7) zugeordnet werden und die den Programmbausteinen (OB10,OB35,OB40,OB80) zugehörigen Teilprogramme in den jeweiligen Unterprozessoren (2,3,4,5,6,7) zum Ablauf gebracht werden, wobei ein Steuermittel (11) derart betrieben wird, dass es als Eingangsgrößen (20) die Bearbeitungspriorität (21) und ein dem jeweiligen Programmbaustein (OB10,OB35,OB40,OB80) zugeordnetes Ereignis (31,32,33,34,35) auswertet und in Abhängigkeit davon die Unterprozessoren (2,3,4,5,6,7) aktiv oder inaktiv schaltet.

## Beschreibung

Die Erfindung betrifft ein Verfahren zum Betrieb einer Industriesteuerung, wobei ein in einem in der Industriesteuerung angeordnetem Prozessor ablauffähiges Steuerungsprogramm in einen Hauptbaustein und mehrere Programmbausteine unterteilt wird, wobei die Programmbausteine unter Berücksichtigung einer Bearbeitungspriorität ereignisgesteuert bearbeitet werden.

Des Weiteren betrifft die Erfindung eine Industriesteuerung mit einem Prozessor für ein ablauffähiges Steuerungsprogramm, welches in einen Hauptbaustein und mehrere Programmbausteine unterteilt ist, wobei die Programmbausteine unter Berücksichtigung einer Bearbeitungspriorität ereignisgesteuert bearbeitet werden.

Das Verfahren zum Betrieb einer Industriesteuerung und die Industriesteuerung sind aus der Offenlegungsschrift EP 2 477 085 A1 bekannt.

Im Sinne der Erfindung wird unter Industriesteuerung vorzugsweise eine speicherprogrammierbare Steuerung (SPS) verstanden, diese ist beispielsweise ein Automatisierungsgerät das zur Steuerung oder Regelung einer Maschine oder einer Anlage in einem industriellen Umfeld eingesetzt wird. Bei einer zyklusorientierten SPS wird durch ein vom Hersteller fest eingespeichertes Betriebssystem dieser Zyklus kontrolliert. Das Steuerungsprogramm kann bedingt durch seine Programmbausteine Verzweigungen und bedingte Aufrufe beinhalten, welche unterschiedliche Belastungen des Prozessors zur Folge haben. Bei derartig aufgebauten Industriesteuerungen ist es von Nachteil, dass Maßnahmen für eine Optimierung hinsichtlich eines Energieverbrauches des Prozessors bei der Abarbeitung des Steuerungsprogrammes nicht getroffen werden können.

Es ist daher die Aufgabe der Erfindung eine Industriesteuerung nach dem Stand der Technik derart weiterzubilden, um einen energiesparenden Betrieb des Prozessors zu ermöglichen.

Bei einem Verfahren zum Betrieb einer Industriesteuerung, wobei ein in einem in der Industriesteuerung angeordnetem Prozessor ablauffähiges Steuerungsprogramm in einen Hauptbaustein und mehrere Programmbausteine unterteilt wird, wobei die Programmbausteine unter Berücksichtigung einer Bearbeitungspriorität ereignisgesteuert bearbeitet werden, wird die Aufgabe dadurch gelöst, dass als Prozessor ein Mehrkernprozessor mit einer Mehrzahl von eigenständigen Unterprozessoren verwendet wird, wobei der Hauptbaustein einem ersten Unterprozessor zugeordnet wird und ein zu den Hauptbaustein zugehöriges Teilprogramm darin zum Ablauf gebracht wird und weiterhin die mehreren Programmbausteine jeweils den weiteren Unterprozessoren zugeordnet werden und die den Programmbausteinen zugehörigen Teilprogramme in den jeweiligen Unterprozessoren zum Ablauf gebracht werden, wobei ein Steuermittel derart betrieben wird, dass es als Eingangsgrößen die Bearbeitungspriorität und ein den jeweiligen Programmbaustein zugeordnetes Ereignis auswertet und in Abhängigkeit davon die Unterprozessoren aktiv oder inaktiv schaltet.

Im Sinne der Erfindung wird unter einem Hauptbaustein, einem Programmbaustein oder einem Funktionsbaustein mit ihren jeweils zugeordneten Teilprogrammen, eine Task verstanden, welche eine in sich geschlossene Aufgabe und/oder Lösungsanweisung in Form von Computerprogrammanweisungen aufweist, verstanden. Die Tasks bzw. Bausteine können gleichzeitig oder hintereinander zu anderen Bausteinen abgearbeitet werden. Die Unterprozessoren sind als gleichberechtigte Kerne eines Mehrkernprozessors zu verstehen.

Verfahrensgemäß wird nun die Möglichkeit bereitgestellt, um einen energiesparenden Betrieb der Industriesteuerung zu ermöglichen, die einzelnen Unterprozessoren gezielt abzuschalten und damit den Energieverbrauch der Industriesteuerung herunterzusetzen. Insbesondere soll vorzugsweise jeder Ablaufebene genau ein eigener Unterprozessor zugeordnet werden.

Ein verbrauchsoptimaler Betrieb der Industriesteuerung könnte durch die folgende Betriebsweise erreicht werden, die einzelnen Unterprozessoren sind zunächst abgeschaltet und wenn beispielsweise ein Ereignis (Prozessalarm, Weckalarm, zyklischer Triggeralarm) auftritt, führt dies zum Start eines bestimmten Programmbausteines und damit zum Aktivieren des zugehörigen Unterprozessors bzw. zum Ausführen des zugehörigen Teilprogrammes, und nach der Abarbeitung des Teilprogrammes kann der Unterprozessor wieder deaktiviert werden.

In einem weiterführenden Verfahrensschritt wird vorteilhafter Weise zusätzlich zu dem Steuermittel ein Ablaufplanmittel betrieben, welches die zeitliche Ausführung des Aktivierens oder des Inaktivierens der Unterprozessoren steuert. Da für das Aktivieren oder Deaktivieren der Unterprozessoren die Bearbeitungspriorität herangezogen wird, ist es sinnvoll in dem Ablaufplanmittel mit den Bearbeitungsprioritäten eine Liste zu erstellen, welcher Programmbaustein bzw. welches Teilprogramm in dem jeweiligen Unterprozessor als nächstes bearbeitet wird. Die Unterprozessoren werden sodann ihrer Reihenfolge gemäß eingeschaltet und wieder abgeschaltet.

Eine weitere vorteilhafte Ausprägung besteht darin, dass das Steuermittel einen Bearbeitungszustand des jeweiligen Unterprozessors während seiner aktiven Phase als weitere Eingangsgröße auswertet und für den Fall, dass eine Bearbeitung des Teilprogramms in den jeweiligen Unterprozessor in einem Bearbeitungsschritt des Teilprogramms aufgrund von einer Konstellation verweilt, in der ein Ergebnis einer Operation von einem zeitlich veränderbaren Ergebnis einer anderen Operation abhängt, den jeweiligen Unterprozessor vorübergehend deaktiviert und sobald die Bearbeitung fortgesetzt werden kann, wird der entsprechende Unterprozessor durch das Steuermittel reaktiviert. Sollte die Bearbeitung des entsprechenden Teilprogrammes in einem Unterprozessor aufgrund einer Wettlaufsituation, einer sogenannten "Race-Condition", nicht weiter bearbeitet werden können, wird der Unterprozessor vorübergehend deaktiviert. Sobald die Bearbeitung wieder fortgesetzt werden kann, reaktiviert das Steuermittel den entsprechenden Unterprozessor erneut. Derartige unbeabsichtigte Wettlaufsituationen von Teilprogrammen sind ein häufiger Grund, dass in einem Zustand, in dem es zur Zeit nicht weiter geht, trotzdem Energie verbraucht wird, welche hätte eingespart werden können. Dies dient insbesondere einer Vermeidung eines aktiven Wartens, bei welcher Taktleistung eines Prozessors ohne Erledigung von Rechenaufgaben vergeudet wird.

Will man die Zeit, die ein Unterprozessor zum Wiederanlauf benötigt, beispielsweise bei der Bearbeitung von Ereignissen wie einen Weckalarm in die zeitlichen Abläufe mit einkalkulieren, so ist es von Vorteil bei Ereignissen, welche in einem bestimmbaren Intervall wiederkehren und einem bestimmten Programmbaustein zugeordnet sind, eine Hochlaufzeit für die den Programmbausteinen zugeordneten Unterprozessoren zu berücksichtigen und die entsprechenden Unterprozessoren um die Hochlaufzeit früher zu aktivieren. Da nun der Hochlauf des betroffenen Unterprozessors um die Hochlaufzeit früher gestartet wird, ist der entsprechende Unterprozessor mit seinem zugehörigen Teilprogramm bei Auftreten des Weckalarms sicher funktionsfähig.

Um auf Ereignisse, auf die in extrem kurzer Zeit reagiert werden soll, angemessen reagieren zu können, wird vorteilhafter Weise eine Wiederholrate der Ereignisse ausgewertet und bei Überschreitung einer vorgegebenen Rate, wird der entsprechende Unterprozessor permanent aktiv geschaltet.

Um eine Bearbeitungszeit bei einem Zugriff auf Daten gering zu halten, greifen die Unterprozessoren auf Daten in einem gemeinsamen Arbeitsspeicher zu, in welchem die Daten als globale Datenbausteine abgelegt werden.

Die eingangs genannte Aufgabe wird ebenso durch eine Industriesteuerung mit einem Prozessor für ein ablauffähiges Steuerungsprogramm, welches in einen Hauptbaustein und mehreren Programmbausteinen unterteilt ist, wobei die Programmbausteine unter Berücksichtigung einer Bearbeitungspriorität ereignisgesteuert bearbeitet werden, dadurch gelöst, dass der Prozessor als ein Mehrkernprozessor mit einer Mehrzahl von eigenständigen Unterprozessoren ausgebildet ist, wobei ein erster Unterprozessor für den Hauptbaustein ausgestaltet und das zu den Hauptbaustein zugehörige Teilprogramm darin ablauffähig ist, die weiteren Unterprozessoren jeweils für mindestens einen Programmbaustein ausgestaltet sind und die den Programmbausteinen zugehörigen Teilprogrammen in den jeweiligen Unterprozessoren ablauffähig sind, mit einem Steuermittel mit einem ersten Eingang für eine Bearbeitungspriorität der jeweiligen Programmbausteine und einem zweiten Eingang für ein den jeweiligen Programmbausteinen zugeordnetes Ereignis, wobei das Steuermittel dazu ausgestaltet ist, in Abhängigkeit von der Bearbeitungspriorität und dem Ereignis, die Unterprozessoren aktiv oder inaktiv zu schalten. Da bei dieser Art der Industriesteuerung gezielt Unterprozessoren abgeschaltet bzw. eingeschaltet werden, kann abhängig von dem Bearbeitungsfortschritt der Teilprogramme Energie gespart werden.

In einer vorteilhaften Ausgestaltung ist die Industriesteuerung mit einem Ablaufplanmittel, welches mit dem Steuermittel in Verbindung steht ausgestaltet, wobei das Ablaufplanmittel derart ausgestaltet ist, die zeitlichen Ausführungen des Aktivierens oder des Inaktivierens der Unterprozessoren zu steuern.

Eine weitere Einsparung von Energie bezüglich der Industriesteuerung kann dadurch erzielt werden, dass das Steuermittel einen dritten Eingang für einen Bearbeitungszustand des jeweiligen Unterprozessors während seiner aktiven Phase aufweist, wobei das Steuermittel weiterhin dazu ausgestaltet ist, in Abhängigkeit von den Bearbeitungszustand den jeweiligen Unterprozessor vorübergehend zu deaktivieren und sobald die Bearbeitung fortgesetzt werden kann, wird der entsprechende Unterprozessor reaktiviert. Diese Ausgestaltung dient insbesondere einer Vermeidung eines aktiven Wartens, bei welcher Taktleistung eines Unterprozessors ohne Erledigung von Rechenaufgaben vergeudet wird.

Um aber trotz des Zuschaltens bzw. Abschaltens von Unterprozessoren auf Ereignisse, auf welche in extrem kurzer Zeit reagiert werden muss, reagieren zu können, ist die Industriesteuerung mit einen Impulszähler ausgestaltet, welcher wiederum ausgestaltet ist, eine Wiederholrate der Ereignisse auszuwerten und bei Überschreitung einer vorgegebenen Rate dem Steuermittel einen Schaltbefehl zu übergeben, wobei das Steuermittel wiederum ausgestaltet ist, den entsprechenden Unterprozessor permanent aktiv zu schalten.

Ein Ausführungsbeispiel des Verfahrens und der Industriesteuerung wird in der Zeichnung näher erläutert. Es zeigen:
- FIG 1: eine Industriesteuerung mit einem Mehrkernprozessor und
- FIG 2: einen schematischen Aufbau eines Steuermittels für den Mehrkernprozessor.

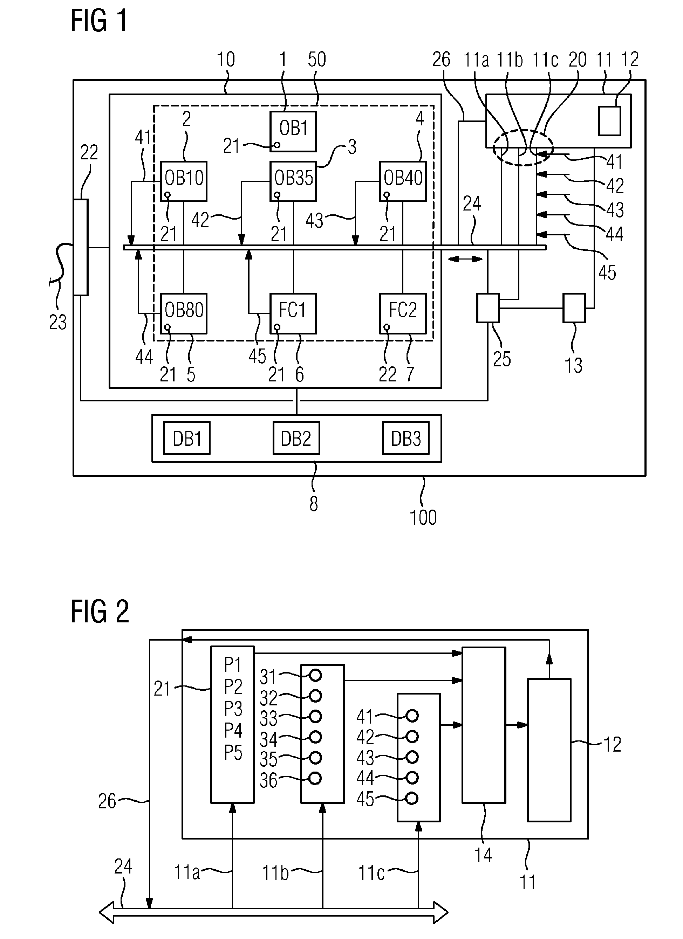

Gemäß FIG 1 ist eine Industriesteuerung 100 mit einem Mehrkernprozessor 10 für ein ablauffähiges Steuerungsprogramm 50, welches in einen Hauptbaustein OB1, einen ersten Programmbaustein OB10, einen zweiten Programmbaustein OB35, einen dritten Programmbaustein OB40, einen vierten Programmbaustein OB80 sowie einen ersten Funktionsbaustein FC1 und einen zweiten Funktionsbaustein FC2 unterteilt ist, dargestellt.

OB's sind dem Fachmann als sogenannte "Organisationsbausteine" in speicherprogrammierbaren Steuerungen bekannt. Es gibt beispielsweise einen OB1 für eine Bearbeitung von Grundfunktionen, insbesondere für eine zyklische Verarbeitung von anderen Programmteilen, einen OB10 für einen Uhrzeitalarm, einen OB35 für einen periodischen Weckalarm, einen OB40 für einen Prozessalarm von Ein-/Ausgabebaugruppen, welcher bestimmte Zustände einer I/O-Peripherie signalisiert, einen OB80 für einen Zykluszeitfehler, für den Fall, dass ein bestimmter eingestellter Zyklus bzw. eine Zeitdauer überschritten wird.

Das Steuerungsprogramm 50 ist in aufgabenspezifische unterschiedliche Teilprogramme unterteilt, welche wiederum den Unterprozessoren zugeordnet sind. Ein erster Unterprozessor 1 ist für den Hauptbaustein OB1 ausgestaltet und das zu dem Hauptbaustein OB1 zugehörige Teilprogramm ist darin ablauffähig. Ein zweiter Unterprozessor 2 ist für dem ersten Programmbaustein OB10 ausgestaltet und das zu dem zweiten Programmbaustein OB10 zugehörige Teilprogramm ist darin ablauffähig. Ein dritter Unterprozessor 3 ist für den zweiten Programmbaustein OB35 ausgestaltet und das zu dem zweiten Programmbaustein OB35 zugehörige Teilprogramm ist darin ablauffähig. Ein vierter Unterprozessor 4 ist für den dritten Programmbaustein OB40 ausgestaltet und das zu dem dritten Programmbaustein OB40 zugehörige Teilprogramm ist darin ablauffähig. Ein fünfter Unterprozessor 5 ist für einen vierten Programmbaustein OB80 ausgestaltet und das zu den vierten Programmbaustein OB80 zugehörige Teilprogramm ist darin ablauffähig. Ein sechster Unterprozessor 6 ist für einen ersten Funktionsbaustein FC1 ausgestaltet und die zu dem ersten Funktionsbaustein FC1 zugehörige Programmfunktion ist darin ablauffähig. Ein siebter Unterprozessor 7 ist für einen zweiten Funktionsbaustein FC2 ausgestaltet und die zu den zweiten Funktionsbaustein FC2 zugehörige Programmfunktion ist darin ablauffähig.

Allen genannten Unterprozessoren 1,...,7 ist eine Bearbeitungspriorität 21 zugeordnet. Eine Bearbeitungspriorität kann beispielsweise in der Wertigkeit 0 bis 6 liegen. Demnach wird ein Unterprozessor mit einer niedrigen Bearbeitungspriorität 21 bevorzugt vor einen Unterprozessor mit einer höheren Bearbeitungspriorität behandelt.

Die Industriesteuerung 100 weist ein Steuermittel 11 mit einem ersten Eingang 11a für die Bearbeitungspriorität 21 der jeweiligen Programmbausteine bzw. der Unterprozessoren und einen zweiten Eingang 11b für ein den jeweiligen Programmbausteinen OB10, OB35, OB40, OB80 zugeordnetes Ereignis 31,32,33, 34,35 auf. Das Steuermittel 11 ist dazu ausgestaltet, in Abhängigkeit von der Bearbeitungspriorität 21 und dem Ereignis 31,33,33,34,35, die Unterprozessoren 2,3,4,5,6,7 aktiv oder inaktiv zu schalten.

Mit einem Ablaufplanmittel 12 welches mit dem Steuermittel 11 in Verbindung steht und ausgestaltet ist die zeitliche Ausführung des Aktivierens oder des Inaktivierens der Unterprozessoren 2,3,4,5,6,7 zu steuern, können die Bearbeitungsprioritäten 21 der Unterprozessoren berücksichtigt werden.

Die Bearbeitungspriorität 21 die Ereignisse 31,...,36 und ein Bearbeitungszustand 41,...,45 der jeweiligen Unterprozessoren werden als Eingangsgrößen 20 zusammengefasst und dem Steuermittel 11 zugeleitet. Über einen Schaltausgang 26 kann das Steuermittel 11 Befehle an den Mehrkernprozessor 10 aussenden, wobei der Mehrkernprozessor 10 dazu ausgestaltet ist, aufgrund der Befehle die Unterprozessoren 1,...,7 zu aktivieren oder zu deaktivieren.

Innerhalb des Mehrkernprozessors 10 sind die Unterprozessoren 1,...,7 mit einem internen Datenbus 24 verbunden. Auch das Steuermittel 11 kann mit seinem Schaltausgang 26 auf den internen Datenbus 24 zugreifen und auch die Eingangsgrößen 20 können von dem Steuermittel 11 von dem internen Datenbus 24 abgenommen werden.

Das Steuermittel 11 weist einen dritten Eingang 11c für einen ersten Bearbeitungszustand 41 bis zu einem fünften Bearbeitungszustand 45 auf. Die Unterprozessoren 1,...,6 sind derart ausgestaltet, dass sie ihren Bearbeitungszustand erster Bearbeitungszustand 41 des zweiten Unterprozessors 2, zweiter Bearbeitungszustand 42 des dritten Unterprozessors 3, dritter Bearbeitungszustand 43 des vierten Unterprozessors 4, vierter Bearbeitungszustand 44 des fünften Unterprozessors 5 und fünfter Bearbeitungszustand 45 des sechsten Unterprozessors 6 auf den internen Datenbus 24 legen können, womit die Bearbeitungszustände 41,...,45 zu dem dritten Eingang 11c gelangen und in den Steuermittel 11 ausgewertet werden können. Das Steuermittel 11 ist dabei derart ausgestaltet, dass es die Bearbeitungszustände 41,...,45 der jeweiligen Unterprozessoren 2,...,6 während ihrer aktiven Phase überwacht, dabei ist das Steuermittel 11 weiterhin dazu ausgestaltet, in Abhängigkeit von den Bearbeitungszustand 41,...,45 der jeweiligen Unterprozessoren 2,...,6 diese nur vorübergehend zu deaktivieren und sobald die Bearbeitung fortgesetzt werden kann, diese wieder zu reaktivieren. Wenn eine Bearbeitung des Teilprogramms in dem jeweiligen Unterprozessor 2,...,6 in einen Bearbeitungsschritt des Teilprogrammes aufgrund von einer Konstellation verweilt, in der ein Ergebnis einer Operation von einem zeitlich veränderbaren Ergebnis einer anderen Operation abhängt, also z.Z. nicht weiter gerechnet werden kann, wird der jeweilige Unterprozessor vorübergehend deaktiviert und sobald die Bearbeitung fortgesetzt werden kann, wird der entsprechende Unterprozessor zum Weiterrechnen reaktiviert.

Die Industriesteuerung 100 ist weiterhin mit einem Impulszähler 13 ausgestaltet, wobei der Impulszähler 13 ausgestaltet ist, eine Wiederholrate der Ereignisse 31,...,35 auszuwerten und bei Überschreitung einer vorgegebenen Rate, dem Steuermittel 11 einen Schaltbefehl zu übergeben, wobei das Steuermittel 11 wiederum ausgestaltet ist, den entsprechenden Unterprozessor 2,...,6 aufgrund der Überschreitung der Wiederholrate permanent aktiv zu schalten. Hierzu steht dem Impulszähler 13 ein Ereignissammler 25 zur Verfügung. Der Ereignissammler 25 ist zum Einen an den internen Datenbus 24 angeschlossen um die dort herrschenden Ereignisse 31,...,36 aufzunehmen und zum Anderen ist der Ereignissammler 25 an eine Ein-/Ausgabeschnittstelle 22 angeschlossen, an welcher ein Bus 23 angeschlossen ist, wobei über den Bus 23 Prozesssignale an die Ein-/Ausgabeschnittstelle 22 geführt werden können. Prozessereignisse können somit auch von dem Ereignissammler 25 gesammelt werden und dem Impulszähler 13 zugeleitet werden.

Für eine gemeinsame Datenablage stehen den Unterprozessoren 1,...,7 ein Arbeitsspeicher 8 zur Verfügung in dem ein erster Datenbaustein DB1, ein zweiter Datenbaustein DB1 und ein dritter Datenbaustein DB3 abgelegt sind.

Aus der FIG 2 ist eine mögliche Ausgestaltung des Steuermittels 11 dargestellt. Der erste Eingang 11a, der zweite Eingang 11b und der dritte Eingang 11c sind an den internen Datenbus 24 angeschlossen. Über den ersten Eingang 11a erhält das Steuermittel 11 eine den jeweiligen Unterprozessoren 1,...,7 zugeordnete Bearbeitungspriorität 21, nämlich eine erste Bearbeitungspriorität B1 bis zu einer fünften Bearbeitungspriorität B5. Über den zweiten Eingang 11b erhält das Steuermittel 11 die Ereignisse der jeweiligen Unterprozessoren, nämlich ein erstes Ereignis 31 bis zu einen sechsten Ereignis 36 und über den dritten Eingang 11c erhält das Steuermittel die Bearbeitungszustände der jeweiligen Unterprozessoren, nämlich ein erster Bearbeitungszustand 41 bis zu einem fünften Bearbeitungszustand 45. Diese drei genannten Größen gehen gemeinsam auf ein Auswertemittel 14 in denen sie nach Bearbeitungspriorität, Ereignis und Bearbeitungszustand ausgewertet werden. Das ausgewertete Ergebnis wird einem Ablaufplanmittel 12 zugeführt, welches an einen Schaltausgang 26 angeschlossen ist. Über den Schaltausgang 26 kann das Steuermittel 11 Schaltbefehle für das Aktivieren oder Deaktivieren der Unterprozessoren auf den internen Bus 24 geben.

Durch das gezielte Aktivieren bzw. Deaktivieren der Unterprozessoren 1,...,7 kann in der Industriesteuerung 100 Energie eingespart werden.

## Patentansprüche

1. Verfahren zum Betrieb einer Industriesteuerung (100), wobei ein in einem in der Industriesteuerung (100) angeordnetem Prozessor ablauffähiges Steuerungsprogramm (50) in einen Hauptbaustein (OB1) und mehrere Programmbausteine (OB10, OB35, OB40, OB80) unterteilt wird, wobei die Programmbausteine (OB10, OB35, OB40, OB80) unter Berücksichtigung einer Bearbeitungspriorität (21) ereignisgesteuert bearbeitet werden, **dadurch gekennzeichnet, dass** als Prozessor ein Mehrkernprozessor (10) mit einer Mehrzahl von eigenständigen Unterprozessoren (1,2,3,4,5,6,7) verwendet wird, wobei der Hauptbaustein (OB1) einem ersten Unterprozessor (1) zugeordnet wird und ein zu dem Hauptbaustein (OB1) zugehörige Teilprogramm darin zum Ablauf gebracht wird und weiterhin die mehreren Programmbausteine (OB10, OB35, OB40, OB80) jeweils den weiteren Unterprozessoren (2,3,4,5,6,7) zugeordnet werden und die den Programmbausteinen (OB10, OB35, OB40, OB80) zugehörigen Teilprogramme in den jeweiligen Unterprozessoren (2,3,4,5,6,7) zum Ablauf gebracht werden, wobei ein Steuermittel (11) derart betrieben wird, dass es als Eingangsgrößen (20) die Bearbeitungspriorität (21) und ein dem jeweiligen Programmbaustein (OB10, OB35, OB40, OB80) zugeordnetes Ereignis (31,32,33,34,35) auswertet und in Abhängigkeit davon die Unterprozessoren (2,3,4,5,6,7) aktiv oder inaktiv schaltet.

2. Verfahren nach Anspruch 1, wobei zusätzlich zu dem Steuermittel (11) ein Ablaufplanmittel (12) betrieben wird, welches die zeitliche Ausführung des Aktivierens oder des Inaktivierens der Unterprozessoren (2,3,4,5,6,7) steuert.

3. Verfahren nach Anspruch 1 oder 2, wobei das Steuermittel (11) einen Bearbeitungszustand (41,42,43,44,45) des jeweiligen Unterprozessors (2,3,4,5,6,7) während seiner aktiven Phase als weitere Eingangsgröße auswertet und für den Fall, dass eine Bearbeitung des Teilprogramms in dem jeweiligen Unterprozessor (2,3,4,5,6,7) in einem Bearbeitungsschritt des Teilprogramms aufgrund von einer Konstellation verweilt, in der ein Ergebnis einer Operation vom einem zeitlich veränderbaren Ergebnis einer anderen Operation abhängt, den jeweiligen Unterprozessor (2,3,4,5,6,7) vorübergehend deaktiviert und sobald die Bearbeitung fortgesetzt werden kann, wird der entsprechende Unterprozessor (2,3,4,5,6,7) reaktiviert.

4. Verfahren nach einem der Ansprüche 1 bis 3, wobei bei Ereignissen (31,32,33,34,35), welche in einem bestimmbaren Intervall wiederkehren und einem bestimmten Programmbaustein (OB10, OB35, OB40, OB80) zugeordnet sind, eine Hochlaufzeit für den den Programmbausteinen (OB10, OB35, OB40, OB80) zugeordneten Unterprozessoren (2,3,4,5,6,7) berücksichtigt wird und der entsprechende Unterprozessor (2,3,4,5,6,7) um die Hochlaufzeit früher aktiviert wird.

5. Verfahren nach einem der Ansprüche 1 bis 4, wobei eine Wiederholrate der Ereignisse (31,32,33,34,35) ausgewertet wird und bei Überschreitung einer vorgegebenen Rate, wird der entsprechende Unterprozessor (2,3,4,5,6,7) permanent aktiv geschaltet.

6. Verfahren nach einem der Ansprüche 1 bis 5, wobei die Unterprozessoren (2,3,4,5,6,7) auf Daten in einem gemeinsamen Arbeitsspeicher (8) zugreifen, in welchem die Daten als globale Datenbausteine (DB1, DB2, DB3) abgelegt werden.

7. Industriesteuerung (100) mit einem Prozessor für ein ablauffähiges Steuerungsprogramm (50), welches in einen Hauptbaustein (OB1) und mehrere Programmbausteine (OB10, OB35, OB40, OB80) unterteilt ist, wobei die Programmbausteine (OB10, OB35, OB40, OB80) unter Berücksichtigung einer Bearbeitungspriorität (21) ereignisgesteuert bearbeitet werden,
**dadurch gekennzeichnet, dass** der Prozessor als ein Mehrkernprozessor (10) mit einer Mehrzahl von eigenständigen Unterprozessoren (1,2,3,4,5,6,7) ausgebildet ist, wobei ein erster Unterprozessor (1) für den Hauptbaustein (OB1) ausgestaltet und das zu dem Hauptbaustein (OB1) zugehörige Teilprogramm darin ablauffähig ist, die weiteren Unterprozessoren (2,3,4,5,6,7) jeweils für mindestens einen Programmbaustein (OB10, OB35, OB40, OB80) ausgestaltet sind und die den Programmbausteinen (OB10, OB35, OB40, OB80) zugehörigen Teilprogrammen in den jeweiligen Unterprozessoren (2,3,4,5,6, 7) ablauffähig sind, mit einem Steuermittel (11) mit einem ersten Eingang (11a) für eine Bearbeitungspriorität (21) der jeweiligen Programmbausteine (OB10, OB35, OB40, OB80) und einem zweiten Eingang (11b) für ein den jeweiligen Programmbausteinen (OB10, OB35, OB40, OB80) zugeordnetes Ereignis (31,32,33,34, 35), wobei das Steuermittel (11) dazu ausgestaltet ist in Abhängigkeit von der Bearbeitungspriorität (21) und dem Ereignis (31,32,33,34,35), die Unterprozessoren (2,3,4,5,6,7) aktiv oder inaktiv zu schalten.

8. Industriesteuerung (100) nach Anspruch 7, mit einem Ablaufplanmittel (12), welches mit dem Steuermittel (11) in Verbindung steht und ausgestaltet ist die zeitliche Ausführung des Aktivierens oder des Inaktivierens der Unterprozessoren (2,3,4,5,6,7) zu steuern.

9. Industriesteuerung (100) nach Anspruch 7 oder 8, wobei das Steuermittel (11) einen dritten Eingang (11c) für einen Bearbeitungszustand (41,42,43,44,45) des jeweiligen Unterprozessors (2,3,4,5,6,7) während seiner aktiven Phase aufweist, wobei das Steuermittel (11) weiterhin dazu ausgestaltet ist in Abhängigkeit von dem Bearbeitungszustand (41,42,43,44,45) den jeweiligen Unterprozessor (2,3,4,5,6,7) vorübergehend zu deaktivieren und sobald die Bearbeitung fortgesetzt werden kann, wird der entsprechende Unterprozessor (2,3,4,5,6,7) reaktiviert.

10. Industriesteuerung (100) nach einem der Ansprüche 7 bis 9, mit einem Impulszähler (13) ausgestaltet eine Wiederholrate der Ereignisse (31,32,33,34,35) auszuwerten und bei Überschreitung einer vorgegebenen Rate, dem Steuermittel (11) einen Schaltbefehl zu übergeben, wobei das Steuermittel (11) wiederum ausgestaltet ist, den entsprechenden Unterprozessor (2,3,4,5,6,7) permanent aktiv zu schalten.
